# FASCICULE DE BREVET EUROPEEN

(11) **EP 0 935 572 B1**
(45) Date de publication et mention de la délivrance du brevet: **25.07.2001**
(21) Numéro de dépôt: 97913240.4
(22) Date de dépôt: 04.11.1997
(51) Int. Cl.: B65G 17/38

(54) **DISPOSITIF DE TRANSFERT**
ÜBERGABEVORRICHTUNG
TRANSFER DEVICE

(30) Priorité: 04.11.1996 FR 9613824
(43) Date de publication de la demande: 18.08.1999
(73) Titulaire: SIDEL Société anonyme, 76930 Octeville-sur-Mer (FR)
(72) Inventeur: CORNET, Maurice, F-03100 Montlucon (FR); GUIFFANT, Alain, F-76600 Le Havre (FR)
(74) Mandataire: Gorrée, Jean-Michel
(86) Numéro de dépôt international: FR9701968
(87) Numéro de publication internationale: WO9819942

(56) Documents cités:
- EP-A- 0 001 194
- EP-A- 0 507 198
- WO-A-96/19401
- FR-A- 385 008
- US-A- 2 193 291
- US-A- 2 455 624
- US-A- 4 177 635

## Description

La présente invention concerne des perfectionnements apportés aux dispositifs de transfert de corps, ce dispositif comportant une multiplicité de platines qui supportent chacune un corps et qui sont accouplées les unes à la suite des autres en une chaîne sans fin curviligne mobile avec des articulations propres à autoriser la curvilinéarité de ladite chaîne mobile ainsi que simultanément la rotation des platines autour d'un axe horizontal pour renverser ou redresser les corps.

Les perfectionnements selon l'invention se rapportent de préférence, bien que non exclusivement, aux dispositifs de transfert de corps creux en matière thermoplastique munis d'une ouverture formant goulot tels que préformes, bouteilles, flacons ou analogues, ce dispositif comportant une multiplicité de platines de support des corps creux respectifs qui sont accouplées les unes à la suite des autres en une chaîne sans fin curviligne mobile avec des articulations propres à autoriser la curvilinéarité de ladite chaîne mobile ainsi que simultanément la rotation des platines autour d'un axe horizontal pour renverser (goulot en bas) ou redresser (goulot en haut) les corps creux.

Une chaîne de transfert constituée comme mentionné ci-dessus se rencontre notamment dans les installations de fabrication de récipients en matière thermoplastique, tels que bouteilles, flacons ou analogues, en particulier pour déplacer les préformes depuis un poste de chargement jusqu'à et à travers un four de chauffage (four tunnel) dans lequel le matériau constitutif des préformes est chauffé pour être ensuite moulé, par un processus de soufflage ou d'étirage-soufflage, en un récipient de grande dimension (récipient intermédiaire ou récipient définitif). La chaîne de transfert est en général agencée pour que le déplacement linéaire des préformes s'accompagne, outre du renversement/redressement précités, d'une rotation des préformes sur elles-mêmes de façon que le matériau soit chauffé de façon homogène sur tout le pourtour des préformes, les moyens de chauffage étant disposés unilatéralement dans le four.

Dans les dispositifs de transfert connus, les platines successives sont réunies de façon articulée les unes aux autres par l'intermédiaire d'accouplements sphériques, comme cela est décrit par exemple dans le document FR 2 728 547 (WO 96/19401) au nom de la Demanderesse.

Ce type de liaison par accouplement sphérique offre l'avantage de procurer à chaque platine tous les degrés de liberté en rotation souhaitables vis-à-vis des platines encadrantes, autorisant la curvilinéarité de la chaîne de transfert, les redressement et renversement des corps creux et la possibilité pour la chaîne de présenter une certaine flèche verticale en raison de son poids.

Toutefois, cette disposition connue présente l'inconvénient d'être de fabrication coûteuse (sphère ou calotte sphérique ; cuvette sphérique).

Eu égard au nombre important des platines entrant dans la constitution d'une telle chaîne de transfert (jusqu'à plusieurs centaines), il a paru souhaitable de concevoir un dispositif de transfert apte à offrir les mêmes caractéristiques fonctionnelles, mais ne mettant en jeu que des articulations simples, faciles à fabriquer et à assembler, et donc moins coûteuses.

A ces fins, Un dispositif de transfert tel que mentionné au préambule se caractérise, étant agencé conformément à l'invention, en ce que les platines de support des corps sont accouplées de la façon suivante :
- les platines sont réunies par paires successives et les deux platines de chaque paire sont accouplées par un arbre horizontal autorisant la rotation mutuelle des deux platines autour dudit arbre pour le renversement ou le redressement des corps et,
- chacune des deux susdites platines d'une paire est accouplée à une autre platine immédiatement adjacente appartenant à une paire voisine de façon articulée autour d'au moins un axe vertical de rotation qui est propre à autoriser leur inclinaison mutuelle autour dudit axe vertical.

Grâce à cet agencement, chaque axe de rotation (vertical autorisant la curvilinéarité de la chaîne ; horizontal pour le renversement/redressement des corps creux) est constitué de façon distincte et donc mécaniquement simple et de conception peu onéreuse.

Dans un mode de réalisation préféré, le susdit arbre horizontal accouplant les deux susdites platines de chaque paire est conformé de manière qu'un jeu subsiste entre lesdites deux platines de chaque paire et que celles-ci puissent s'incliner l'une par rapport l'autre verticalement par rotation mutuelle autour d'un axe imaginaire perpendiculaire conjointement aux susdits axes horizontal et vertical.

Ainsi, non seulement on réalise les deux types d'axe de rotation qui sont fonctionnellement requis pour un traitement correct des corps transportés, mais en outre on confère au système un troisième degré de liberté en rotation qui, bien qu'étant d'amplitude angulaire très restreinte au niveau de chaque arbre d'accouplement, est toutefois suffisant pour éviter le coincement des platines les unes contre les autres sous l'action de leur propre poids (flèche).

Avantageusement, l'arbre interdit l'inclinaison mutuelle de ces deux platines (Aᵢ, Bᵢ) autour d'un axe vertical ; il est également avantageux que l'accouplement de deux platines appartenant rexpectivement à des paires voisines soit propre à interdire leur rotation mutuelle autour d'un axe horizontal.

Dans un mode de réalisation préféré en raison de sa simplicité structurelle et de son coût relativement faible, l'arbre horizontal d'accouplement des deux platines est solidaire rigidement, par une de ses extrémités, d'une première des platines et est relié à la seconde platine, par son autre extrémité, par l'intermédiaire d'un roulement à billes ; de préférence alors, le roulement à billes comporte, d'une part, une cage intérieure entourant ladite autre extrémité de l'arbre d'accouplement et en appui contre une portée terminale formée par une tête élargie de ladite extrémité de l'arbre et, d'autre part, une cage extérieure retenue dans une cavité prévue dans ladite seconde platine; il est alors souhaitable que le susdit jeu entre les deux platines d'une même paire soit autorisé grâce à la conformation de la cage intérieure, de la cage extérieure et des billes.

Pour ce qui est maintenant de l'articulation des platines autour d'axes verticaux propre à autoriser une trajectoire curviligne de la chaîne de transfert, il est souhaitable de prévoir une pièce d'attelage interposée entre chacune des deux susdites platines et la platine qui lui est immédiatement adjacente, ladite pièce d'attelage étant articulée avec les deux platines qu'elle réunit alors autour de deux axes respectifs de rotation ; de préférence alors, les deux axes de rotation de la pièce d'attelage et des deux platines respectives sont respectivement coaxiaux aux corps supportés par les platines. Grâce à cet agencement, tous les corps coïncident avec des axes verticaux de rotation des platines de support et l'on est ainsi assuré que tous les corps suivent des trajectoires rigoureusement identiques dans les portions courbes de déplacement de la chaîne, ce qui est d'une extrême importance par exemple lorsqu'il s'agit de corps qui défilent devant des lampes de chauffage au cours d'un traitement thermique.

Il est alors intéressant de profiter de la présence de la pièce d'attelage pour lui attribuer des fonctions supplémentaires. En particulier, on peut faire en sorte que la pièce d'attelage supporte en outre au moins un organe de guidage propre à coopérer avec une came fixe de commande de rotation autour du susdit arbre horizontal pour le renversement ou le redressement des corps. De la sorte, les deux platines auxquelles la pièce d'attelage est accouplée sont entraînées en rotation de façon parfaitement synchrone et ces deux platines, bien que disposées tête-bêche, peuvent être réalisées structurellement de façon rigoureusement identique, ce qui simplifie la fabrication et réduit les coûts de production.

En considérant les dispositions conformes à l'invention qui viennent d'être exposées, on constate que les platines ne sont plus totalement indépendantes les unes des autres, du point de vue des diverses rotations, comme c'était le cas dans les dispositifs antérieurs. Les platines sont, ici, solidaires sous forme de paires : chaque platine est solidaire d'une des platines adjacentes pour la rotation autour de l'axe horizontal (renversement/redressement des corps creux) et de la platine adjacente opposée pour la rotation autour de l'axe vertical (curvilinéarité de la chaîne). Toutefois, cette solidarisation par paires ne pose en pratique aucun problème et ne constitue donc pas un handicap.

L'invention sera mieux comprise à la lecture de la description qui suit de certains modes de réalisation donnés uniquement à titre d'exemples purement illustratifs. Dans cette description, on se réfère aux dessins annexés sur lesquels :
- la figure 1 est une vue de côté, en coupe, d'une partie d'un dispositif de transfert de corps agencé conformément à un mode de réalisation préféré de l'invention;
- la figure 2 est une vue de dessus en coupe selon la ligne II-II de la figure 1 ;
- les figures 3 et 4 sont des vues à échelle très agrandie, en vue de côté, d'une partie du dispositif de la figure 1, respectivement dans deux positions fonctionnelles différentes ;
- les figures 5 et 6 illustrent, en vue de dessus, respectivement deux autres modes de réalisation du dispositif des figures 1 et 2 ; et
- la figure 7 est une vue fragmentaire illustrant une variante de réalisation d'une partie du dispositif des figures 1 à 6.

Dans la description détaillée qui suit, on prendra en considération un dispositif de transfert de corps creux qui semble constituer une application intéressante et préférée de l'invention, étant entendu toutefois que l'invention peut s'appliquer à des dispositifs de transfert de tous corps.

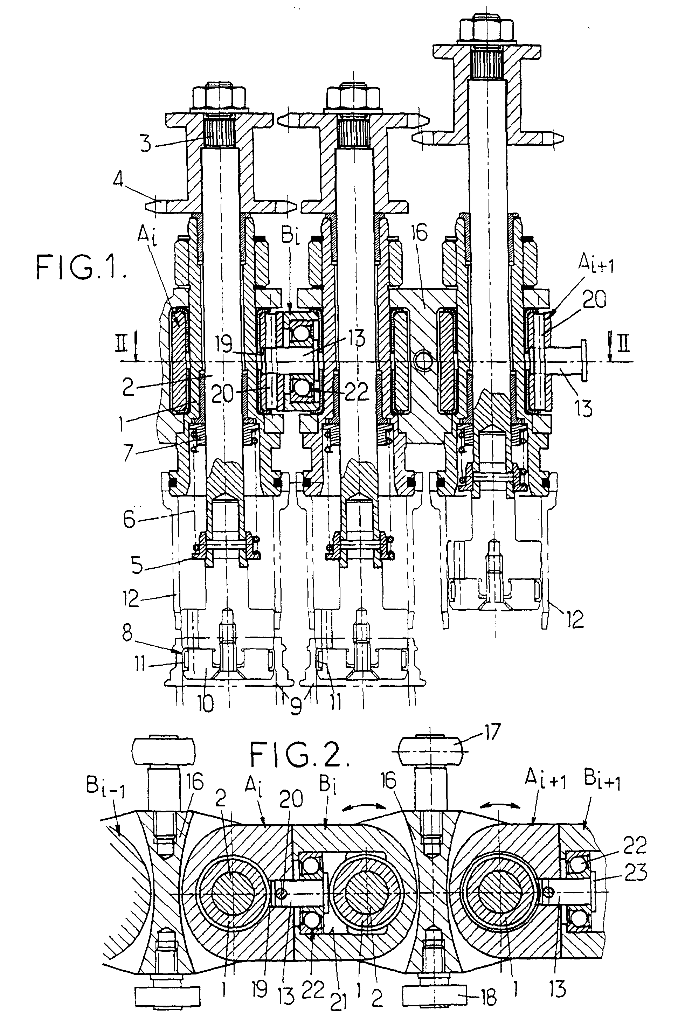

En se référant tout d'abord à la figure 1, il y est représenté une partie d'un dispositif de transfert de corps creux notamment en matière thermoplastique munis d'une ouverture formant goulot tels que préformes, bouteilles, flacons, etc.

Le dispositif de transfert comporte une multiplicité de paires successives de platines de support Aᵢ, Bᵢ, ces platines étant propres à supporter des corps creux respectifs. Ces platines sont accouplées les unes à la suite des autres d'une manière qui sera explicitée plus loin de façon à constituer une chaîne sans fin curviligne mobile.

Chaque platine Aᵢ, Bᵢ supporte un corps tubulaire 1 vertical dans lequel une tige 2 est supportée à libre rotation avec en général possibilité de déplacement axial.

Chaque tige 2 possède une extrémité supérieure 3 saillant au-delà du corps tubulaire 1 et sur laquelle est fixée, solidaire en rotation, une roue dentée 4 propre à engrêner avec une chaîne à maillons telle qu'une chaîne de Galle (non représentée) qui est disposée fixe le long de la trajectoire suivie par le dispositif de transfert : l'engrènement de la roue 4 avec la chaîne à maillons fixe provoque la rotation de la tige 2 sur elle-même, par exemple en vue d'une exposition régulière d'un corps creux au rayonnement d'un organe de chauffage disposé unilatéralement.

A son extrémité inférieure, la tige 2 présente un épaulement 5 sur lequel prend appui un ressort de rappel 6 s'appuyant à son autre extrémité contre un épaulement intérieur 7 du corps tubulaire.

L'extrémité inférieure de la tige 2 supporte par ailleurs une tête de préhension 8 propre à saisir un corps creux 9 (tige du milieu sur la fig. 1) par son goulot. Dans l'exemple représenté, la tête de préhension 8 comporte un noyau central 10 supportant une bague périphérique 11 élastiquement déformable radialement qui, étant introduite dans le goulot du corps creux 9, retient celui-ci par friction.

Sur la figure 1, les deux tiges de gauche et du milieu sont maintenues en position basse sous l'action du ressort de rappel 6 (position chargée), tandis que la tige de droite est remontée sous l'action d'un effort extérieur (par exemple une came) à l'encontre du ressort 6 de manière que la tête de préhension 8 remonte dans une jupe tubulaire 12 prolongeant le corps tubulaire 1 vers le bas et chassant le corps creux 9 hors de la tête de préhension 8 (position déchargée ou attente de chargement).

L'agencement qui vient d'être décrit n'est donné qu'à titre d'exemple et n'est pas directement lié avec les dispositions propres à l'invention qui vont maintenant être plus précisément décrites.

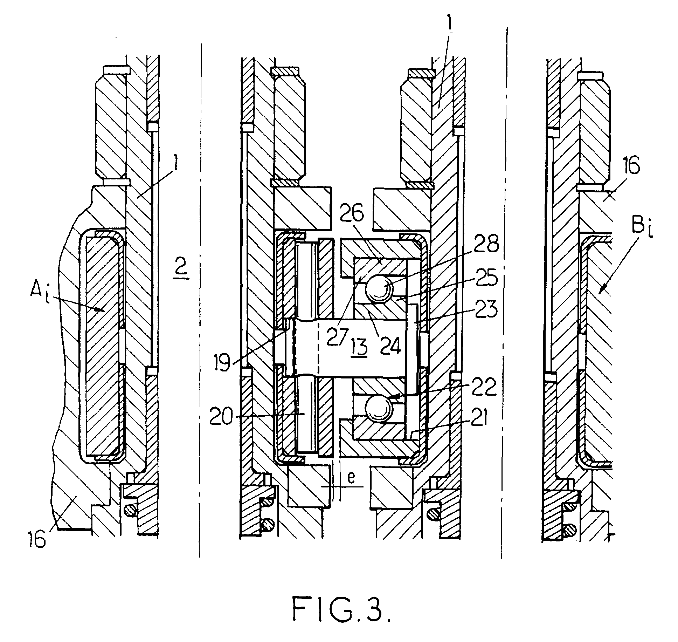

Comme visible plus facilement sur les trois figures 2, 5 et 6, deux platines consécutives Aᵢ et Bᵢ sont accouplées l'une à l'autre par un arbre horizontal 13 (c'est-à-dire s'étendant sensiblement selon la direction de déplacement de la chaîne sans fin) autorisant la seule rotation mutuelle des deux platines Aᵢ, Bᵢ autour dudit arbre (renversement des corps creux goulot en bas, ou redressement des corps creux goulot en haut) et interdisant toute inclinaison sensible mutuelle de ces deux platines autour d'un axe vertical.

Par ailleurs, chacune des deux platines Aᵢ, Bᵢ précitées est accouplée à une autre platine immédiatement adjacente (Aᵢ avec Bᵢ₋₁ située à sa gauche sur le dessin ; Bᵢ avec Aᵢ₊ᵢ située à sa droite sur le dessin) de façon articulée autour d'au moins un axe vertical de rotation propre à autoriser seulement l'inclinaison mutuelle des platines Aᵢ₊ᵢ et Bᵢ, et Aᵢ et Bᵢ₋₁ autour dudit axe vertical et à interdire leur rotation mutuelle autour d'un axe horizontal.

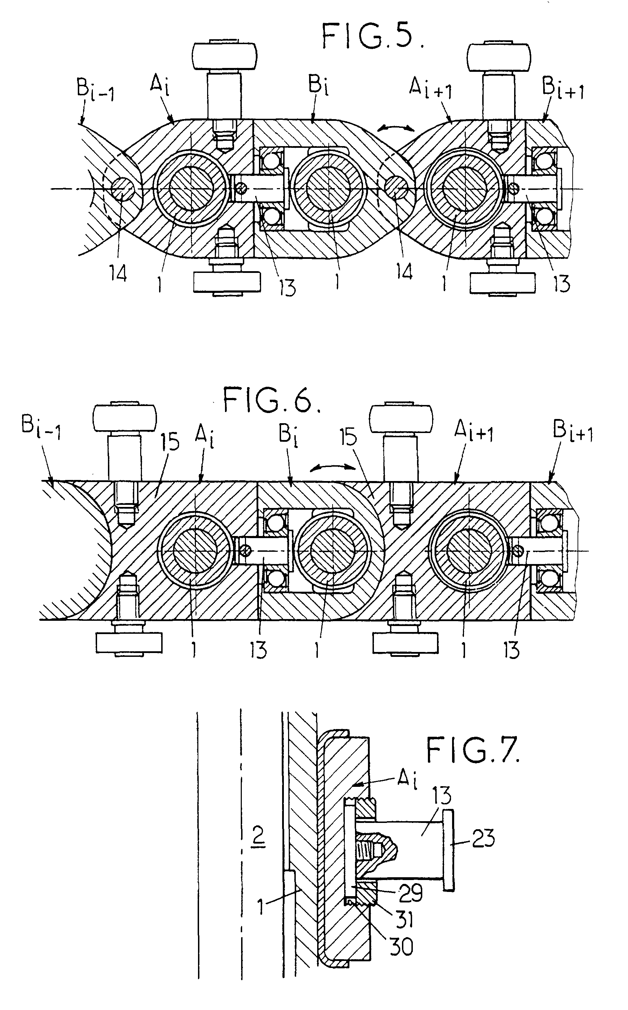

Pour ce qui est de ce dernier agencement, on peut accoupler par un pivot 14 vertical les extrémités correspondantes, qui se chevauchent, des couples de platines Aᵢ, Bᵢ₋₁; Bᵢ, Aᵢ₊₁ ; etc, comme cela est illustré à la figure 5.

On peut aussi envisager, comme cela est illustré à la figure 6, de munir chaque platine Aᵢ d'une partie allongée 15 (s'étendant vers la gauche sur le dessin) propre à chevaucher partiellement la platine Bᵢ₋₁ adjacente et à entourer le corps tubulaire 1 supporté par cette dernière : ainsi ce sont lesdits corps tubulaires 1 des platines Bᵢ qui constituent les pivots d'articulation verticale.

Toutefois, on notera que, aussi bien dans le mode de réalisation de la figure 5 que dans celui de la figure 6, certains au moins des corps tubulaires 1 ne suivent pas rigoureusement l'axe médian dans les parties courbes de la trajectoire (les deux corps tubulaires 1 respectivement des platines Aᵢ et Bᵢ dans l'agencement de la figure 5 ; le corps tubulaire 1 de la platine Aᵢ dans l'agencement de la figure 6). Dans ce cas, au moins certains corps tubulaires sont, dans les parties courbes de trajectoires, légèrement déportés vers le centre de courbure. Dans certaines applications, il peut en résulter un inconvénient grave (par exemple à la traversée d'un four de chauffage, les corps creux supportés par les tiges 2 centrées dans ces corps tubulaires sont sensiblement rapprochées, respectivement éloignées des lampes de chauffage disposées latéralement selon l'emplacement de montage de ces lampes, et le traitement thermique de ces corps creux est incorrect).

Pour éviter cet inconvénient, on peut avantageusement avoir recours à l'agencement de la figure 2 dans lequel on a mis en oeuvre une pièce d'attelage 16 qui est interposée entre les platines à accoupler Aᵢ, Bᵢ₋₁ ; Bᵢ, Aᵢ₊₁ ; etc. Cette pièce d'attelage 16 est agencée pour chevaucher partiellement les platines Bᵢ et Aᵢ₊₁ (ou Aᵢ et Bᵢ₋₁), en entourant les corps tubulaires 1 supportés par celles-ci. De la sorte, les axes de tous les corps tubulaires 1 du dispositif coïncident avec des axes vericaux d'articulation et l'on est alors assuré que tous les corps creux supportés par lesdits corps tubulaires suivent rigoureusement la même trajectoire centrée.

On peut profiter de la place disponible sur les pièces d'attelage 16 pour les équiper de certains accessoires, par exemple les roues ou galets 17, 18 nécessaires à la commande de redressement/retournement par coopération avec une came fixe.

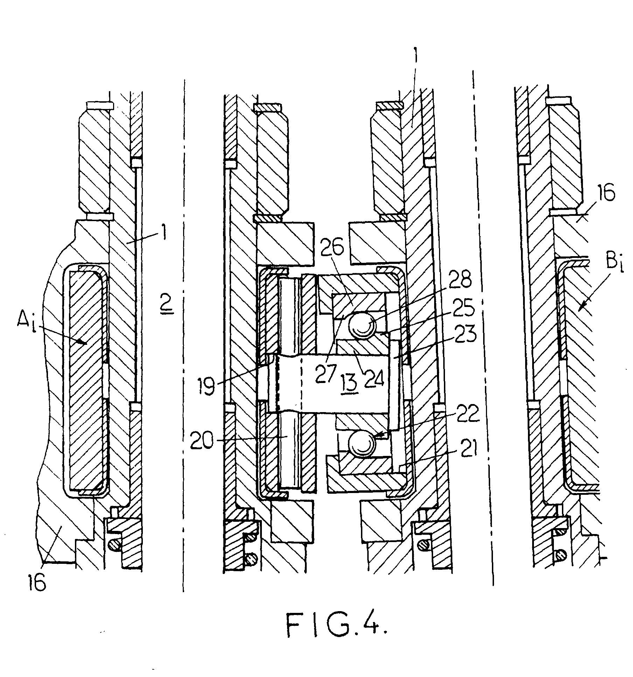

Pour ce qui est maintenant de l'accouplement des platines Aᵢ, Bᵢ par l'intermediaire d'un arbre horizontal 13, on peut avoir avantageusement recours au mode de réalisation préféré illustré à la figure 1 et, à échelle agrandie, aux figures 3 et 4.

A une de ses extrémités, l'arbre 13 peut être solidarisé rigidement à l'une des platines, ici la platine Aᵢ. A cet effet, on peut prévoir que la platine Aᵢ est pourvue d'un logement axial 19 dans lequel est engagée sans jeu notable ladite extrémité de l'arbre 13 et une goupille verticale 20 est emmanchée dans des trous en coïncidence pratiqués dans la platine Aᵢ et l'arbre 13 pour bloquer l'arbre dans la platine aussi bien axialement qu'en rotation.

L'autre extrémité de l'arbre 13 est engagée dans une cavité 21 intérieure à l'autre platine Bᵢ et un roulement à billes 22 est interposé entre l'arbre 13 et la platine Bᵢ. A cet effet, la cage interne 24 du roulement à billes entoure l'arbre 13 et est en appui axial contre une portée formée par une tête terminale élargie 23 de l'arbre 13. La cage externe 26 du roulement à billes 22 repose contre la paroi de la cavité 21 précitée et est en appui axial contre un rebord frontal de la cavité 21. La cage interne 24 présente un rebord annulaire périphérique 25 s'étendant radialement par rapport à l'arbre 13, du côté de la tête terminale élargie 23, et en direction de la cage extérieure 26. La cage extérieure 26 présente un rebord annulaire périphérique 27 s'étendant radialement par rapport à l'arbre 13, du côté opposé à la tête élargie 23, et en direction de la cage intérieure 24. Ainsi, en fonctionnement, les billes 28 sont coincées entre les cages 24, 26 non seulement radialement, mais aussi axialement et transmettent l'effort de traction d'une platine à la suivante lors du déplacement de la chaîne.

Enfin, les surfaces mutuellement en regard des platines Aᵢ et Bᵢ respectivement sont sensiblement planes de manière à faciliter le mouvement de rotation mutuel.

Toutefois, comme visible à la figure 3, il est souhaitable que les deux surfaces mutuellement en regard des platines Aᵢ et Bᵢ ne soient pas maintenues rigoureusement plaquées l'une contre l'autre et que la longueur de l'arbre 13 soit déterminée de manière qu'un jeu e sensible, bien que très faible, subsiste entre elles. Sur les figures 3 et 4, ce jeu a été considérablement agrandi pour faciliter la lecture des dessins ; mais en pratique un jeu e inférieur à environ 0,8 mm, de préférence de l'ordre de 0,2 à 0,5 mm, peut suffire pour les architectures les plus courantes des installations concernées.

Du fait de cet agencement, l'arbre 13 reste parfaitement solidaire de la platine Aᵢ, mais, comme illustré à la figure 4, la platine Bᵢ peut effectuer un déplacement de rotation ou basculement par rapport à la platine Aᵢ, grâce à la possibilité d'un faible décalage mutuel des deux cages 24, 26 du roulement à billes et dans la limite imposée par la valeur du jeu e. Ce déplacement ou basculement correspond à une capacité de rotation autour d'un axe de rotation imaginaire perpendiculaire conjointement aux axes horizontal (arbre 13) et vertical (axe des corps tubulaires 1) dont il a été question plus haut.

On permet ainsi à l'ensemble de la chaîne de prendre, localement, la flèche requise pour un fonctionnement correct du dispositif malgré le poids important de chaque élément (toutes les pièces sont usinées en acier).

Bien entendu, l'accouplement entre les paires de platines Aᵢ et Bᵢ pourrait être réalisé de manières différentes. En particulier, il n'est pas impératif que l'arbre 13 soit solidaire en rotation de l'une des platines (ici la platine Aᵢ), et il pourrait tout aussi bien être accouplé à la platine Aᵢ à libre rotation, éventuellement avec interposition d'un roulement. A titre d'exemple, à la figure 7 l'arbre 13 possède une seconde tête élargie 29 qui est engagée dans un évidement taraudé 30 de la platine Aᵢ et qui y est retenue et bloquée axialement par un écrou 31.

Toutefois, le mode de réalisation qui a été plus spécifiquement décrit ci-dessus et représenté sur les dessins est celui qui semble actuellement le mieux approprié sur le plan de la résistance mécanique et de la fiabilité, de la simplicité structurelle et d'un coût aussi réduit que possible aussi bien pour la fabrication que pour l'entretien.

## Revendications

1. Dispositif de transfert de corps, ce dispositif comportant une multiplicité de platines (Aᵢ, Bᵢ) qui supportent chacune un corps et qui sont accouplées les unes à la suite des autres en une chaîne sans fin curviligne mobile avec des articulations propres à autoriser la curvilinéarité de ladite chaîne mobile ainsi que simultanément la rotation des platines autour d'un axe horizontal pour renverser ou redresser les corps,
caractérisé en ce que les platines de support des corps sont accouplées de la façon suivante :
- les platines sont réunies par paires (Aᵢ, Bᵢ) successives et les deux platines (Aᵢ, Bᵢ) de chaque paire sont accouplées par un arbre horizontal (13) autorisant la rotation mutuelle des deux platines autour dudit arbre pour le renversement ou le redressement des corps (9), et
- chacune des deux susdites platines (respectivement Aᵢ, Bᵢ) d'une paire est accouplée à une autre platine immédiatement adjacente appartenant à une paire voisine (respectivement Bᵢ₋₁ ; Aᵢ₊₁) de façon articulée autour d'au moins un axe vertical de rotation propre à autoriser leur inclinaison mutuelle autour dudit axe vertical.

2. Dispositif selon la revendication 1, caractérisé en ce qu'en outre, le susdit arbre horizontal (13) accouplant les deux susdites platines (Aᵢ, Bᵢ) d'une paire est conformé de manière qu'un jeu subsiste entre lesdites deux platines (Aᵢ, Bᵢ) de chaque paire et que celle-ci puissent s'incliner l'une par rapport l'autre verticalement par rotation mutuelle autour d'un axe imaginaire perpendiculaire conjointement aux susdits axes horizontal et vertical.

3. Dispositif selon la revendication 1 ou 2, caractérisé en ce que l'arbre horizontal (13) accouplant les deux platines (Aᵢ, Bᵢ) de chaque paire de platines interdit l'inclinaison mutuelle de ces deux platines (Aᵢ, Bᵢ) autour d'un axe vertical.

4. Dispositif selon l'une quelconque des revendications précédentes, caractérisé en ce que l'accouplement de deux platines appartenant respectivement à des paires voisines est propre à interdire leur rotation mutuelle autour d'un axe horizontal.

5. Dispositif selon l'une quelconque des revendications précédentes, caractérisé en ce que l'arbre horizontal (13) d'accouplement des deux platines (Aᵢ, Bᵢ) d'une paire est solidaire rigidement, par une de ses extrémités, d'une première des platines (Aᵢ) et est relié à la seconde platine (Bᵢ), par son autre extrémité, par l'intermédiaire d'un roulement à billes (22).

6. Dispositif selon la revendication 5, caractérisé en ce que le roulement à billes (22) comporte, d'une part, une cage intérieure entourant ladite autre extrémité de l'arbre d'accouplement (13) et en appui contre une portée terminale formée par une tête élargie (23) de ladite extrémité de l'arbre (13) et, d'autre part, une cage extérieure retenue dans une cavité (21) prévue dans ladite seconde platine (Bᵢ).

7. Dispositif selon la revendication 6, caractérisé en ce que la conformation de la cage intérieure (24), de la cage extérieure (26) et des billes (28) autorise le susdit jeu entre les deux platines (Aᵢ, Bᵢ) d'une même paire.

8. Dispositif selon l'une quelconque des revendications précédentes, caractérisé en ce qu'il comporte une pièce d'attelage (16) interposée entre chacune des deux susdites platines (respectivement Aᵢ ; Bᵢ) et la platine qui lui est immédiatement adjacente (respectivement Bᵢ₋₁ ; Aᵢ₊₁), ladite pièce d'attelage (16) étant articulée avec les deux platines qu'elle réunie (Aᵢ, Bᵢ₋₁ ; Aᵢ₊₁, Bᵢ) autour de deux axes respectifs de rotation.

9. Dispositif selon la revendication 8, caractérisé en ce que les deux axes de rotation de la pièce d'attelage (16) et des deux platines respectives sont respectivement coaxiaux aux corps tubulaires (1) supportés par les platines.

10. Dispositif selon la revendication 8 ou 9, caractérisé en ce que la pièce d'attelage (16) supporte en outre au moins un organe de guidage (17, 18) propre à coopérer avec une came fixe de commande de rotation autour du susdit arbre horizontal pour le renversement ou le redressement des corps.

11. Dispositif de transfert de corps creux (9) en matière plastique munis d'une ouverture formant goulot tels que préformes, bouteilles, flacons ou analogues, ce dispositif comportant une multiplicité de platines (Aᵢ, Bᵢ) de support des corps creus respectifs qui sont accouplées les unes à la suite des autres en une chaîne sans fin curviligne mobile avec des articulations propres à autoriser la curvilinéarité de ladite chaîne mobile ainsi que simultanément la rotation des platines autour d'un axe horizontal pour renverser (goulot en bas) ou redresser (goulot en haut) les corps creux,
caractérisé en ce qu'il est constitué selon l'une quelconque des revendications précédentes.

## Patentansprüche

1. Vorrichtung für den Transfer von Körpern, wobei die Vorrichtung eine Mehrheit von Platten (Aᵢ, Bᵢ) aufweist, die jeweils einen Körper tragen und aufeinanderfolgend zu einer beweglichen, gekrümmt verlaufenden Endloskette mit Gelenkverbindungen gekoppelt sind, die dazu geeignet sind, sowohl den gekrümmten Verlauf der beweglichen Kette als auch gleichzeitig die Drehung der Platten um eine horizontale Achse zum Umstürzen oder Aufrichten der Körper zuzulassen,
dadurch gekennzeichnet, daß die Platten zum Tragen der Körper auf die folgende Weise gekoppelt sind:
- die Platten sind zu aufeinanderfolgenden Paaren (Aᵢ, Bᵢ) vereint, und die beiden Platten (Aᵢ, Bᵢ) eines jeden Paares sind durch eine horizontale Welle (13) gekoppelt, welche die wechselseitige Drehung der beiden Platten um die Welle zum Umstürzen oder Aufrichten der Körper (9) zuläßt, und
- jede der beiden Platten (Aᵢ bzw. Bᵢ) eines Paares ist an eine unmittelbar benachbarte, zu einem benachbarten Paar (Bᵢ₋₁ bzw. Aᵢ₊₁) gehörende weitere Platte gekoppelt, auf gelenkige Weise um mindestens eine vertikale Drehachse, die geeignet ist, deren wechselseitige Neigung um die vertikale Achse zuzulassen.

2. Vorrichtung nach Anspruch 1, dadurch gekennzeichnet, daß des weiteren die horizontale Achse (13), welche die beiden Platten (Aᵢ, Bᵢ) eines Paares koppelt, derart ausgebildet ist, daß ein Spiel zwischen den beiden Platten (Aᵢ, Bᵢ) eines jeden Plattenpaares besteht, und daß diese sich durch wechselseitige Drehung um eine imaginäre Achse, die gleichzeitig zu der horizontalen und der vertikalen Achse senkrecht steht, in Bezug aufeinander neigen können

3. Vorrichtung nach Anspruch 1 oder 2, dadurch gekennzeichnet, daß die horizontale Welle (13), welche die beiden Platten (Aᵢ, Bᵢ) eines jeden Plattenpaares koppelt, die wechselseitige Neigung dieser beiden Platten (Aᵢ, Bᵢ) um eine vertikale Achse verhindert.

4. Vorrichtung nach einem der vorhergehenden Ansprüche, dadurch gekennzeichnet, daß die Kopplung der beiden Platten, die jeweils benachbarten Paaren angehören, dazu geeignet ist, deren wechselseitige Drehung um eine horizontale Achse zu verhindern.

5. Vorrichtung nach einem der vorhergehenden Ansprüche, dadurch gekennzeichnet, daß die horizontale Welle (13) zum Koppeln der beiden Platten (Aᵢ, Bᵢ) eines Paares mit einem ihrer Enden mit einer ersten der Platten (Aᵢ) starr verbunden und mit ihrem anderen Ende über ein Kugellager (22) mit der zweiten Platte (Bᵢ) verbunden ist.

6. Vorrichtung nach Anspruch 5, dadurch gekennzeichnet, daß das Kugellager (22) einerseits einen inneren Lagerring aufweist, der das genannte andere Ende der Kopplungswelle (13) umschließt und an einer durch einen verbreiterten Kopf (23) des Endes der Welle (13) gebildeten Endauflagefläche abgestützt ist, und andererseits einen äußeren Lagerring, der in einer in der zweiten Platte (Bᵢ) vorgesehenen Aussparung (21) gehalten ist.

7. Vorrichtung nach Anspruch 6, dadurch gekennzeichnet, daß die Ausbildung des inneren Lagerrings (24), des äußeren Lagerrings (26) und der Kugeln (28) das genannte Spiel zwischen den beiden Platten (Aᵢ, Bᵢ) eines gleichen Paares zuläßt.

8. Vorrichtung nach einem der vorhergehenden Ansprüche, dadurch gekennzeichnet, daß sie ein Zwischenverbindungsteil (16) aufweist, das jeweils zwischen einer der beiden Platten (Aᵢ bzw. Bᵢ) und der dazu unmittelbar benachbarten Platte (Bᵢ₋₁ bzw. Aᵢ₊₁) angeordnet ist, wobei das Zwischenverbindungsteil (16) mit den beiden Platten, die sie vereint (Aᵢ, Bᵢ₋₁; Aᵢ₊₁, Bᵢ), um zwei jeweilige Drehachsen gelenkig verbunden ist.

9. Vorrichtung nach Anspruch 8, dadurch gekennzeichnet, daß die zwei Drehachsen des Zwischenverbindungsteils (16) und der beiden jeweiligen Platten jeweils koaxial zu den von den Platten getragenen röhrenförmigen Körpern (1) sind.

10. Vorrichtung nach Anspruch 8 oder 9, dadurch gekennzeichnet, daß das Zwischenverbindungsteil (16) des weiteren mindestens ein Führungsorgan (17, 18) trägt, das dazu geeignet ist, zum Umstürzen bzw. Aufrichten der Körper mit einer feststehenden Kurve zum Steuern der Drehung um die horizontale Welle zusammenzuwirken.

11. Vorrichtung für den Transfer von Hohlkörpern (9) aus Plastikmaterial, die mit einer einen Hals darstellenden Öffnung versehen sind, wie etwa Vorformlingen, Flaschen, Flakons oder dergleichen, wobei die Vorrichtung eine Mehrzahl von Platten (Aᵢ, Bᵢ) zum Tragen der jeweiligen Hohlkörper aufweist, die aufeinanderfolgend zu einer beweglichen, gekrümmt verlaufenden Endloskette mit Gelenkverbindungen gekoppelt sind, die dazu geeignet sind, sowohl den gekrümmten Verlauf der beweglichen Kette als auch gleichzeitig die Drehung der Platten um eine horizontale Achse zum Umstürzen (Hals unten) oder Aufrichten (Hals oben) der Körper zuzulassen,
dadurch gekennzeichnet, daß sie gemäß einem der vorhergehenden Ansprüche aufgebaut ist.

## Claims

1. A body transfer device, this device comprising a multiplicity of plates (Aᵢ, Bᵢ) which each support a body and which are coupled one after another in an endless curvilinear mobile chain with articulations suitable to allow the curvilinearity of said mobile chain and simultaneously the rotation of the plates around a horizontal axis so as to turn the bodies over or set them upright,
characterised in that the plates supporting the bodies are coupled in the following way :
- the plates are joined in successive pairs (Aᵢ, Bᵢ) and the two plates (Aᵢ, Bᵢ) of each pair are coupled by a horizontal shaft (13) allowing the mutual rotation of the two plates around said shaft to turn the bodies (9) over or set them upright, and
- each of the two above-mentioned plates (Aᵢ, Bᵢ respectively) of a pair is coupled to another immediately adjacent plate belonging to a neighbouring pair (Bᵢ₋₁ ; Aᵢ₊₁ respectively) in an articulated way around at least one vertical axis of rotation which is suitable to allow their mutual inclination around said vertical axis.

2. A device according to claim 1, characterised in that, additionally, the above-mentioned horizontal shaft (13) coupling the two above-mentioned plates (Aᵢ, Bᵢ) of a pair is configured so that there remains some clearance between said two plates (Aᵢ, Bᵢ) of each pair and that these may tilt relative to each other vertically by mutual rotation around an imaginary axis perpendicular at the same time to the above-mentioned horizontal and vertical axes.

3. A device according to claim 1 or 2, characterised in that the horizontal shaft (13) coupling the two plates (Aᵢ, Bᵢ) of each pair of plates prevents the mutual inclination of these two plates (Aᵢ, Bᵢ) around a vertical axis.

4. A device according to any one of the previous claims, characterised in that the coupling of two plates belonging respectively to neighbouring pairs is suitable to prevent their mutual rotation around a horizontal axis.

5. A device according to any one of the previous claims, characterised in that the horizontal coupling shaft (13) of the two plates (Aᵢ, Bᵢ) of a pair is rigidly fixed, by one of its ends, with a first of the plates (Aᵢ) and is connected to the second plate (Bᵢ), by its other end, by means of a ball bearing (22).

6. A device according to claim 5, characterised in that the ball bearing (22) comprises, on the one hand, an internal race surrounding said other end of the coupling shaft (13) and supported against a terminal support surface formed by a widened head (23) of said shaft (13) end and, on the other hand, an external race retained in a cavity (21) provided in said second plate (Bᵢ).

7. A device according to claim 6, characterised in that the configuration of the internal race (24), the external race (26) and the balls (28) allows the above-mentioned clearance between the two plates (Aᵢ, Bᵢ) of a same pair.

8. A device according to any one of the previous claims, characterised in that it comprises a coupling component (16) interposed between each of the two above-mentioned plates (Aᵢ ; Bᵢ respectively) and the plate which is immediately adjacent to it (Bᵢ₋₁ ; Aᵢ₊₁ respectively), said coupling component (16) being articulated with the two plates which it joins (Aᵢ, Bᵢ₋₁ ; Aᵢ₊₁, Bᵢ) around two respective axes of rotation.

9. A device according to claim 8, characterised in that the two axes of rotation of the coupling component (16) and of the two respective plates are respectively coaxial to the tubular bodies (1) supported by the plates.

10. A device according to claim 8 or 9, characterised in that the coupling component (16) supports additionally at least one guide part (17, 18) suitable to engage with a fixed cam controlling rotation around the above-mentioned horizontal shaft for turning the bodies over or setting them upright.

11. A device for transferring hollow bodies (9) made of thermoplastic material equipped with an opening forming a neck such as preforms, bottles, flasks or the like, this device comprising a multiplicity of plates (Aᵢ; Bᵢ) supporting respective hollow bodies which are coupled one after another in an endless curvilinear mobile chain with articulations suitable to allow the curvilinearity of said mobile chain and simultaneously the rotation of the plates around a horizontal axis so as to turn the hollow bodies over (neck down) or set them upright (neck up), characterised in that it is constituted according to any one of the previous claims.
